# EUROPÄISCHE PATENTSCHRIFT

(11) **EP 2 595 724 B1**
(45) Veröffentlichungstag und Bekanntmachung des Hinweises auf die Patenterteilung: **25.06.2014**
(21) Anmeldenummer: 11739011.2
(22) Anmeldetag: 07.07.2011
(51) Int. Cl.: B01D 46/24, B01D 46/00, B01D 46/02

(54) **VERFAHREN ZUR REINIGUNG EINES MIT STÄUBEN BELADENEN GASSTROMS**
METHOD FOR CLEANING A GAS FLOW LOADED WITH DUST
PROCÉDÉ D'ÉPURATION D'UN FLUX GAZEUX CHARGÉ EN POUSSIÈRES

(30) Priorität: 20.07.2010 AT 12242010
(43) Veröffentlichungstag der Anmeldung: 29.05.2013
(73) Patentinhaber: Siemens VAI Metals Technologies GmbH, 4031 Linz (AT)
(72) Erfinder: MILLNER, Robert, A-3382 Loosdorf (AT)
(74) Vertreter: Maier, Daniel Oliver
(86) Internationale Anmeldenummer: PCT/EP2011/061507
(87) Internationale Veröffentlichungsnummer: WO 2012/010430

(56) Entgegenhaltungen:
- EP-A1- 0 191 718
- WO-A1-2010/046210
- DE-A1- 3 124 485
- GB-A- 761 999
- GB-A- 1 214 872
- US-A- 5 269 835

## Beschreibung

Die Erfindung betrifft ein Verfahren zur Reinigung eines mit Stäuben und/oder mit feinpartikelförmigen Feststoffen beladenen Gasstroms aus Topgas und/oder Offgas und/oder Exportgas von einer Direktreduktionsanlage oder Schmelzreduktionsanlage zur Reduktion, und gegebenenfalls zum Erschmelzen, von stückigen oder partikelförmigen, insbesondere feinpartikelförmigen, Feststoffen, wobei der Gastrom zunächst mittels zumindest eines Trockenfilters einer Trockenreinigung unterzogen wird, wobei Stäube und/oder feinpartikelförmige Einsatzstoffe aus dem Gastrom abgetrennt werden, und dieser gereinigte Gasstrom zumindest teilweise einer CO₂-Abscheideeinrichtung zur CO₂-Abscheidung zugeführt wird, wobei CO₂ und gegebenenfalls Wasser abgeschieden werden, unter Bildung eines im wesentlichen CO₂-freien Produktgases und eines CO₂-reichen Tailgases

Eine Schmelzreduktionsanlage wird in einem zweistufigen Verfahren betrieben, wobei in einem ersten Schritt metallhältige feste Rohstoffe mittels Reduktionsgas reduziert werden und dieses vorreduzierte Material in einem zweiten Schritt zu flüssigen Metall unter gleichzeitiger Zugabe von Energieträgern, insbesondere Kohle, Koks, etc., erschmolzen wird. Unter Schmelzreduktionsanlagen im Sinn dieser Anmeldung werden ein Hochofen (betrieben mit Heißwind und/oder Sauerstoff), eine Anlage nach dem COREX^{®} oder FINEX^{®} Verfahren und weiteren verfügbaren Schmelzreduktionsverfahren verstanden.

Es ist aus dem Stand der Technik bekannt, dass Trockenfilter zur Reinigung von, insbesondere heißen, Prozessgasen, wie z.B. Gichtgas aus Hochöfen oder Topgas aus Reduktionsanlagen, genutzt werden. Vorteilhaft ist dabei, dass im Gegensatz zur Nassreinigung keine Schlämme oder Abwässer anfallen, die wiederum einer aufwändigen Nachbehandlung zugeführt werden müssten. Weiters ist es bekannt die Trockenfilter durch Rückspülen mittels Spülgasen zu Reinigen, wobei der Filterkuchen vom Filter abgelöst wird. Dazu finden im Stand der Technik vor allem Druckluft aber auch Stickstoff Anwendung. Nachteilig ist dabei, dass zusätzliche Prozessgase in beträchtlichen Mengen nötig sind.

Aus der JP 05-076803 A ist es bekannt einen Filter in einem Zyklon anzuordnen, wobei nach einer Grobabscheidung im Zyklon eine Feinabscheidung im Filter erfolgt. Das dabei abgeschiedene Material kann weiter verarbeitet werden.

Ebenso zeigt die WO 94/11283 Stäube von einem Fördergas zu trennen und die dabei abgeschiedenen Stäube einem offenen Gefäß zuzuführen bzw. das Fördergas im Zyklon und einem Sackfilter zu reinigen.

Es ist daher eine Aufgabe der Erfindung ein Verfahren zur Verfügung zu stellen, das die Reinigung eines Trockenfilters sicher und kostengünstiger ermöglicht.

Diese Aufgabe wird durch das erfindungsgemäße Verfahren nach Anspruch 1 gelöst.

Durch das erfindungsgemäße Verfahren wird ein Produktgas, das nahezu frei von CO₂ ist, zum Rückspülen des zumindest einen Trockenfilters genutzt. Produktgas wird durch Adsorptionsanlagen, wie z.B. (Vakuum)-Druckwechsel-Adsorption (englisch PSA Pressure Swing Adsorption oder VPSA Vacuum Pressure Swing Adsorption), hergestellt, wobei CO₂ und Feuchte aus einem Gas abgeschieden werden. Damit entsteht ein hinsichtlich CO und H₂ angereichertes Gas, das keine Feuchtigkeit aufweist (Taupunkt <-100°C). Dieses trockene und reine Produktgas eignet sich hervorragend zum Rückspülen der Trockenfilter bzw. zum Entfernen des Filterkuchens, wobei aufgrund der

Zusammensetzung des Produktgases dieses als hochwertiges Gas z.B. gemeinsam mit Exportgas weiteren Nutzungen zugeführt werden kann. Als vorteilhaft hat sich ein Druckbereich von insbesondere 1,5 bis 12 bar_{g} und besonders bevorzugt von 2 bis 6 bar_{g} zum Rückspülen herausgestellt. Bei Nutzung von z.B. Stickstoff als Gas zum Rückspülen des Trockenfilters kommt es zu einer ungewollten Anreicherung von Stickstoff im Prozessgas bzw. im Exportgas. Zudem müssen nach dem Stand der Technik relativ große Mengen an Spülgas wie z.B. Stickstoff eingesetzt werden. Neben den genannten Gasen können auch die Topgase von Direktreduktionsanlagen auf Basis von reformiertem Erdgas oder aus MIDREX^{®}-Anlagen, die im Verbund mit Kohlegasanlagen arbeiten oder deren Produkte auch von Sauerstoffhochöfen verarbeitet werden.

Nach einer besonderen Ausgestaltung des erfindungsgemäßen Verfahrens wird das zum Rückspülen genutzte Produktgas nach dem Rückspülen wiederum durch den Trockenfilter geführt und dabei gereinigt. Aufgrund der zum Reduktionsgas vergleichbaren Zusammensetzung kann das Produktgas wieder verwendet werden und z.B. mit Prozessgasen aus der Direktreduktionsanlage gemischt werden.

Durch das Produktgas wird der Druck auf der Reingasseite im Filterelement (z.B. eines Schlauchfilters, keramische Filterkerze, etc.) kurzzeitig erhöht, wodurch es zu einer Abreinigung des Filterkuchens an der Außenseite des Filterelementes kommt. Das Produktgas vermischt sich nach dem Rückspülen mit dem Prozessgas und wird daher entweder über die Gasrückführung im Prozess wieder eingesetzt und/oder mit dem Exportgas (z.B. thermische Nutzung im Kraftwerk, etc.) genutzt. Das Produktgas kann in etwa die folgende Zusammensetzung aufweisen:

| Gasbestandteil | Typische Anteile: | Typischer Bereich: |
|---|---|---|
| CO | 52 vol% | 45 - 60 vol% |
| CO₂ | 3 vol% | 2 - 3 vol% |
| H₂ | 25 vol% | 20 - 35 vol% |
| H₂O | 0 vol% | 0 vol% |
| CH₄ | 2 vol% | 1 - 2 vol% |
| N₂ | 18 vol% | 5 - 25 vol% |

Eine spezielle Ausgestaltung des erfindungsgemäßen Verfahrens sieht vor, dass zumindest ein Teil des gereinigten Produktgases erneut der Direktreduktionsanlage oder der Schmelzreduktionsanlage und/oder einer im Verbund mit zumindest einer dieser Anlagen oder einer Kohlevergaseranlage arbeitenden weiteren Reduktionsanlage als Reduktionsgas zugeführt wird. Das gereinigte und trockene Produktgas, das zum Spülen des Trockenfilters eingesetzt wurde, eignet sich für die Nutzung in der Direktreduktionsanlage, in der Schmelzreduktionsanlage oder auch für die Nutzung in weiteren Reduktionsanlagen, die im Verbund mit der Direktreduktions- oder Schmelzreduktionsanlage betrieben werden. Der Betrieb einer Direktreduktionsanlage gemeinsam mit einem Hochofen ist eine vorteilhafte Ausgestaltung. Beispielsweise kann das gereinigte Produktgas auch dem Exportgas aus der Direktreduktionsanlage zugeführt werden.

Eine alternative Ausgestaltung des erfindungsgemäßen Verfahrens sieht vor, dass zumindest ein Teil des Produktgases nach dessen Nutzung im Trockenfilter erneut der Direktreduktionsanlage oder der Schmelzreduktionsanlage und/oder einer im Verbund mit zumindest einer dieser Anlagen oder einer Kohlevergaseranlage arbeitenden weiteren Reduktionsanlage als Reduktionsgas zugeführt wird. Durch die Nutzung des Produktgases kann die Prozesseffizienz gesteigert werden, wobei diese auch im Verbund einer Direktreduktionsanlage mit einer weiteren Reduktionsanlage erfolgen kann.

Gemäß einer speziellen Ausgestaltung des erfindungsgemäßen Verfahrens wird zum Rückspülen des Trockenfilters während des Anfahr- und/oder Abfahrbetriebszustandes alternativ zu Produktgas Stickstoff genutzt.

Eine geeignete Ausgestaltung des erfindungsgemäßen Verfahrens sieht vor, dass die Schmelzreduktionssanlage nach einem Verfahren vom Typ COREX^{®} oder FINEX^{®} betrieben wird oder ein Hochofen ist. COREX^{®} und FINEX^{®} sind bekannte Schmelzreduktionsverfahren zur Reduktion von partikelförmigen bzw. von feinpartikelförmigen Einsatzstoffen. Topgas aus dem COREX^{®}-Verfahren bzw. Off-gas aus dem FINEX^{®}-Verfahren oder Gichtgas aus einem Hochofen kann damit der erfindungsgemäßen Nutzung zugeführt werden, wobei das Produktgas wiederum weiter genutzt werden kann, ohne dass es dabei zu einer negativen Beeinträchtigung der Prozessgase bzw. des Exportgases kommt. Dieses kann daher z.B. zusammen mit Exportgas weiteren Nutzungen zugeführt werden. Beispielsweise ist eine thermische Nutzung des Exportgases zur Energieerzeugung in einem angeschlossenen Kraftwerk, z.B. in einem Gas- und Dampfkraftwerk denkbar.

Nach einer speziellen Ausgestaltung des erfindungsgemäßen Verfahrens sind die partikelförmigen Einsatzstoffe oxidische, eisenhältige Feststoffe, insbesondere Eisenerze, und gegebenenfalls Zuschlagstoffe.

Nach einer weiteren speziellen Ausgestaltung des erfindungsgemäßen Verfahrens wird der Filterkuchen zur weiteren Nutzung einer Kompaktiereinrichtung, insbesondere einer Agglomeriereinrichtung, oder einem metallurgischen Aggregat, insbesondere einem Schmelzaggregat, zur Verarbeitung der partikelförmigen Feststoffe zugeführt. Damit wird neben dem Produktgas zum Rückspülen des Trockenfilters auch der Filterkuchen einer Verwertung zugeführt. Darüber hinaus sind weitere Verwertungen des Filterkuchens möglich.

Aufgrund der großen Mengen an Stäuben und feinpartikelförmigen Feststoffen, die sich in Prozessgasen der Reduktionsmetallurgie ergeben, müssen Reinigungseinrichtungen für Prozessgase derart ausgelegt werden, dass diese großen Mengen sicher verarbeitet werden können. Um eine sichere Funktion des Trockenfilters zu gewährleisten, weist der Trockenfilter Rückspüleinrichtungen zum Abtrennen des Filterkuchens vom Trockenfilter auf. Zumeist steht der Trockenfilter mit einem Behälter, der einen konusförmigen unteren Teil aufweist, derart in Verbindung, dass der Filterkuchen beim Rückspülen in den unteren Teil des Behälters gelangt. Durch das Rückspülen der Filtereinrichtung wird der Filter gereinigt und wieder in den anfänglichen Betriebszustand versetzt. Die am Filter als Filterkuchen abgelagerten Feststoffe werden vom Trockenfilter entfernt und in den Behälter eingebracht. Vom Behälter kann der Filterkuchen z.B. einer Agglomeriereinrichtung oder einer sonstigen Weiterverarbeitung zugeführt werden.

Beim Betrieb üblicher COREX^{®}-Anlagen fallen in etwa 380.000 Nm³/Std. Topgas mit einer Temperatur von etwa 300°C an, welches vor der Nutzung des Topgases gereinigt werden muss. Dies erfolgt durch eine trockene Filterung. Für einen sicheren Betrieb der Trockenfilter ist dazu etwa 300 Nm³/Std. Spülgas, konkret also Produktgas nötig. Entsprechend kann durch die Erfindung diese Menge an Stickstoff, der als Spülgas genutzt wird, eingespart werden. Beim Betrieb von FINEX^{®}-Anlagen fällt das Exportgas mit einer Temperatur von etwa 450°C an, wobei etwa 330.000 Nm³/Std durch den Trockenfilter gereinigt werden müssen. Übliche Spülgasmengen sind dabei etwa 500 Nm³/Std. Das Spülgas wird mit einem Druck von 4 bis 8 bar_{g}, insbesondere mit etwa 5,5barg, eingebracht. Typische Spüldauern pro Filterelementgruppe betragen Bruchteile von Sekunden, wobei die einzelnen Filterelementgruppen oder aber auch Einzelfilter zyklisch (z.B. aufgrund eines Grenzwertes für den Differenzdruck oder nach Ablauf einer Zeitspanne) nacheinander angereinigt werden.

Als Trockenfilter können gesinterte poröse Metallfilter, Keramikfilter oder auch Sack- bzw. Schlauchfilter eingesetzt werden. Derartige Filter zeichnen sich durch hohe Betriebstemperaturen aus. Bei Sack- oder Schlauchfiltern kann es erforderlich sein, dass Gas zuvor einer Kühlung zu unterwerfen.

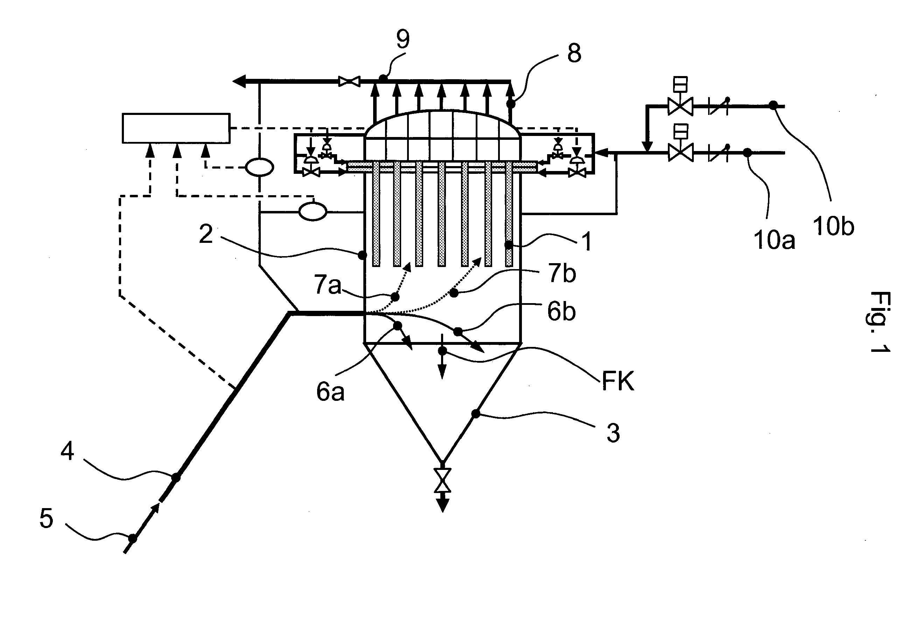

Fig. 1: Beispiel eines Trockenfilters mit Rückspüleinrichtung für Topgas oder Offgas

Figur 1 zeigt eine mögliche Ausgestaltung eines Trockenfilters mit Filterelementen 1, die in einem Gehäuse 2 angeordnet sind. Unter dem Gehäuse 2 ist ein konusförmiger Behälter 3 angeordnet. Der konusförmige Behälter 3 kann z.B. mit einer nicht dargestellten Agglomeriereinrichtung und/oder einem ebenfalls nicht dargestellten Schmelzaggregat verbunden werden, sodass der Filterkuchen aus dem konusförmigen Behälter 3 abgeführt werden kann. Über eine Transportleitung 4 wird ein mit Stäuben und/oder mit feinpartikelförmigen Feststoffen beladener Gasstrom 5 aus Topgas und/oder Exportgas aus einer Direktreduktionsanlage in das Gehäuse 2 eingeleitet.

Der einströmende Gasstrom 5 und die partikelförmigen Feststoffe trennen sich teilweise im Gehäuse 2, wobei ein Teil der feinpartikelförmigen Feststoffe 6a und 6b aufgrund von Schwerkraft in den Behälter 3 absinkt. Stäube und die restlichen feinpartikelförmigen Feststoffe werden mit dem Gasstrom 7a, 7b in den Trockenfilter befördert und scheiden sich an den Filterelementen 1 ab. Der gereinigte Gasstrom wird über Rohre 8 einer oder mehreren Abführleitungen 9 aus dem Trockenfilter abgeleitet und einer nicht dargestellten CO₂-Abscheideeinrichtung zugeführt, wobei ein weitgehend CO₂-freies und trockenes Produktgas und ein CO₂-reiches Tailgas gebildet werden. Alternativ kann auch ein Teil des gereinigten Gasstroms vor der CO₂-Abscheideeinrichtung ausgeschleust werden.

Der Trockenfilter weist Rückspüleinrichtungen 10a auf, mit denen je nach Bedarf ein Teil des Produktgases als Spülgas unter Überdruck von etwa 6,5bar entgegen der Strömungsrichtung des Gasstroms in den Trockenfilter eingeleitet werden kann, wobei die abgeschiedenen Stäube und feinpartikelförmige Feststoffe, die den Filterkuchen FK bilden, von den Filterelementen 1 wiederum abgetragen und in den Behälter 3 verbracht werden können. Alternativ kann auch über eine Rückspüleinrichtung 10b Stickstoff eingebracht werden.

Die Rückspüleinrichtung kann als Ringleitung mit einer Vielzahl an Einleitungen und entsprechenden Absperrventilen ausgebildet sein. Üblicherweise wird die Zufuhr des mit Stäuben und/oder mit feinpartikelförmigen Feststoffen beladenen Gasstromes 5 in den Trockenfilter währen des Spülens mit Produktgas durch Ventile unterbrochen.

Der Trockenfilter kann bei Verwendung von keramischen Filterelementen das heiße Topgas unmittelbar verarbeiten. Bei Verwendung von Sack- oder Schlauchfiltern ist es nötig das Topgas vor der Filterung zu kühlen. Jedenfalls kann die Abwärme des heißen Topgases vor oder nach der Trockenfilterung zur Erzeugung von Dampf genutzt und das gereinigte Topgas in einer Turbine entspannt und weiteren externen Nutzungen zugeführt werden.

### Bezugszeichenliste

- 1: Filterelemente
- 2: Gehäuse
- 3: konusförmiger Behälter
- 4: Transportleitung
- 5: Gasstrom
- 6a, 6b: feinpartikelförmige Feststoffe
- 7a, 7b: Stäube und restliche feinpartikelförmige Feststoffe
- 8: Rohre
- 9: Abführleitungen
- 10a, 10b: Rückspüleinrichtungen
- 11: Rohre

## Patentansprüche

1. Verfahren zur Reinigung eines mit Stäuben und/oder mit feinpartikelförmigen Feststoffen beladenen Gasstroms aus Topgas und/oder Offgas und/oder Exportgas von einer Direktreduktionsanlage oder Schmelzreduktionsanlage zur Reduktion, und gegebenenfalls zum Erschmelzen, von stückigen oder partikelförmigen, insbesondere feinpartikelförmigen, Feststoffen, wobei der Gastrom zunächst mittels zumindest eines Trockenfilters einer Trockenreinigung unterzogen wird, wobei Stäube und/oder feinpartikelförmige Einsatzstoffe aus dem Gastrom abgetrennt werden, und dieser gereinigte Gasstrom zumindest teilweise einer CO₂-Abscheideeinrichtung zur CO₂-Abscheidung zugeführt wird, wobei CO₂ und gegebenenfalls Wasser abgeschieden werden, unter Bildung eines im wesentlichen CO₂-freien Produktgases und eines CO₂-reichen Tailgases, **dadurch gekennzeichnet, dass** zumindest ein Teil des Produktgases unter Druck, insbesondere von 1,5 bis 12 bar_{g}, besonders bevorzugt 2 bis 6 bar_{g}, zum Rückspülen des zumindest einen Trockenfilters und zum Entfernen des Filterkuchens, in den Trockenfilter eingeleitet wird.

2. Verfahren nach Anspruch 1, **dadurch gekennzeichnet, dass** das zum Rückspülen genutzte Produktgas nach dem Rückspülen wiederum durch den Trockenfilter geführt und dabei gereinigt wird.

3. Verfahren nach Anspruch 2, **dadurch gekennzeichnet, dass** zumindest ein Teil des reinen Produktgases erneut der Direktreduktionsanlage oder der Schmelzreduktionsanlage und/oder einer im Verbund mit zumindest einer dieser Anlagen oder einer Kohlevergaseranlage arbeitenden weiteren Reduktionsanlage als Reduktionsgas zugeführt wird.

4. Verfahren nach einem der Ansprüche 1 bis 3, **dadurch gekennzeichnet, dass** zumindest ein Teil des Produktgases nach dessen Nutzung im Trockenfilter erneut der Direktreduktionsanlage oder der Schmelzreduktionsanlage und/oder einer im Verbund mit zumindest einer dieser Anlagen oder einer Kohlevergaseranlage arbeitenden weiteren Reduktionsanlage als Reduktionsgas zugeführt wird.

5. Verfahren nach einem der Ansprüche 1 bis 4, **dadurch gekennzeichnet, dass** zum Rückspülen des Trockenfilters während des Anfahr- und/oder Abfahrbetriebszustandes alternativ zu Produktgas Stickstoff genutzt wird.

6. Verfahren nach einem der Ansprüche 1 bis 5, **dadurch gekennzeichnet, dass** die partikelförmigen Einsatzstoffe oxidische, eisenhältige Feststoffe, insbesondere Eisenerze, und gegebenenfalls Zuschlagstoffe sind.

7. Verfahren nach einem der Ansprüche 1 bis 6, **dadurch gekennzeichnet, dass** der Filterkuchen zur weiteren Nutzung einer Kompaktiereinrichtung, insbesondere einer Agglomeriereinrichtung, oder einem metallurgischen Aggregat, insbesondere einem Schmelzaggregat, zur Verarbeitung der partikelförmigen Feststoffe zugeführt wird.

## Claims

1. Method for cleaning a gas flow made up of top gas and/or off gas and/or export gas from a direct reduction plant or melt reduction plant, which is loaded with dust and/or with fine particulate solids, for the reduction, and where applicable for the smelting, of lumpy or particulate, in particular fine particulate, solids, wherein the gas flow is initially subjected to a dry cleaning by means of at least one dry filter, wherein dusts and/or fine particulate raw materials are separated from the gas flow, and this cleaned gas flow is fed at least in part to a CO₂ separating device for the purpose of CO₂ separation, wherein CO2 and where applicable water are separated, forming a product gas which is substantially free of CO₂ and a tail gas which is rich in CO₂,
**characterised in that**
at least one part of the product gas is introduced into the dry filter under pressure, in particular from 1.5 to 12 bar_{g}, particularly preferably 2 to 6 bar_{g}, for backflushing the at least one dry filter and for removing the filter cake.

2. Method according to claim 1,
**characterised in that**
the product gas used for backflushing is in turn fed through the dry filter after the backflushing and is thereby cleaned.

3. Method according to claim 2,
**characterised in that**
at least one part of the clean product gas is fed again as reduction gas to the direct reduction plant or the melt reduction plant and/or a further reduction plant operating in conjunction with at least one of these plants or a coal gasifier plant.

4. Method according to one of claims 1 to 3,
**characterised in that**
at least one part of the product gas, after it has been used in the dry filter, is fed again as reduction gas to the direct reduction plant or the melt reduction plant and/or a further reduction plant operating in conjunction with at least one of these plants or a coal gasifier plant.

5. Method according to one of claims 1 to 4,
**characterised in that**
nitrogen is used as an alternative to product gas for backflushing the dry filter during the startup and/or shutdown operating states.

6. Method according to one of claims 1 to 5,
**characterised in that**
the particulate raw materials are oxidic solids containing iron, in particular iron ores, and where applicable additives.

7. Method according to one of claims 1 to 6,
**characterised in that**
for further use the filter cake is fed to a compacting facility, in particular an agglomerating unit, or a metallurgical unit, in particular a melting unit, for processing the particulate solids.

## Revendications

1. Procédé d'épuration d'un flux gazeux chargé de poussières et/ou de matières solides se présentant sous la forme de particules fines, et provenant d'un gaz de gueulard et/ou d'un gaz d'échappement et/ou d'un gaz d'exportation d'une installation de réduction directe ou d'une installation de réduction par fusion pour la réduction et, le cas échéant, la fusion de matières solides en morceaux ou particulaires, et se présentant plus particulièrement sous la forme de particules fines, le flux gazeux étant tout d'abord soumis à une épuration sèche au moyen d'au moins un filtre sec, des poussières et/ou des matières premières qui se présentent sous la forme de particules fines étant séparées du flux gazeux, et ce flux gazeux épuré étant amené au moins en partie à un dispositif de séparation de CO₂ pour la séparation de CO₂, le CO₂ et, le cas échéant, de l'eau étant séparés, avec formation d'un gaz produit sensiblement exempt de CO₂ et d'un gaz de queue riche en CO₂, **caractérisé en ce qu'**au moins une partie du gaz produit est introduite dans le filtre sec sous pression, en particulier avec une pression de 1,5 à 12 bar_{g}, et de manière particulièrement préférentielle avec une pression de 2 à 6 bar_{g}, pour le lavage à contre-courant de l'au moins un filtre sec et pour l'enlèvement du gâteau de filtre.

2. Procédé selon la revendication 1, **caractérisé en ce que**, après le lavage à contre-courant, le gaz produit utilisé pour le lavage à contre-courant repasse par le filtre sec tout en étant épuré.

3. Procédé selon la revendication 2, **caractérisé en ce qu'**au moins une partie du gaz produit pur est de nouveau amenée, en tant que gaz de réduction, à l'installation de réduction directe ou à l'installation de réduction par fusion et/ou à une autre installation de réduction qui fonctionne en interconnexion avec au moins l'une de ces installations ou une installation de gazéification de charbon.

4. Procédé selon l'une des revendications 1 à 3, **caractérisé en ce qu'**au moins une partie du gaz produit, après utilisation dans le filtre sec, est de nouveau amenée, en tant que gaz de réduction, à l'installation de réduction directe ou à l'installation de réduction par fusion et/ou à une autre installation de réduction qui fonctionne en interconnexion avec au moins l'une de ces installations ou une installation de gazéification de charbon.

5. Procédé selon l'une des revendications 1 à 4, **caractérisé en ce qu'**on utilise de l'azote, au lieu de gaz produit, pour le lavage à contre-courant du filtre sec pendant l'état de fonctionnement de démarrage et/ou de mise à l'arrêt.

6. Procédé selon l'une des revendications 1 à 5, **caractérisé en ce que** les matières premières particulaires sont des matières solides oxydiques, ferreuses, et plus particulièrement des minerais de fer, et, le cas échéant, des agrégats.

7. Procédé selon l'une des revendications 1 à 6, **caractérisé en ce que** le gâteau de filtre est amené, pour utilisation subséquente, à un dispositif de compactage, et plus particulièrement à un dispositif d'agglomération, ou à une unité métallurgique, et plus particulièrement à une unité de fusion, pour le traitement des matières solides particulaires.
